Europäisches Patentamt

European Patent Office

Office européen des brevets

(11) Veröffentlichungsnummer: **0 564 702 A2**

## (12) EUROPÄISCHE PATENTANMELDUNG

(21) Anmeldenummer: **92119192.0**

(22) Anmeldetag: **10.11.92**

(51) Int. Cl.5: **H04M 11/06**

(30) Priorität: **04.04.92 DE 4211820**

(43) Veröffentlichungstag der Anmeldung:
**13.10.93 Patentblatt 93/41**

(84) Benannte Vertragsstaaten:
**AT BE CH DE DK ES FR GB GR IE IT LI LU NL PT SE**

(71) Anmelder: **DETEWE - DEUTSCHE TELEPHONWERKE Aktiengesellschaft & Co.**
**Zeughofstrasse 1**
**D-10997 Berlin(DE)**

(72) Erfinder: **Baumeister, Rolf**
**Emdener Strasse 32**
**W-1000 Berlin 21(DE)**

(54) **Verfahren zur Datenübertragung auf Fernsprechleitungen.**

(57) Das Verfahren zur Datenübertragung auf Fernsprechleitungen parallel zur Sprachübertragung mit einer Trägerfrequenz oberhalb der Frequenz des Sprachbandes verwendet nur einen Generator zum Erzeugen der Trägerfrequenz, die ständig an den Fernsprechleitungen liegt. Die Datenübertragung selbst wird durch Reflexion der Trägerfrequenz an veränderlichen Abschlußimpedanzen der Fernsprechleitungen gesteuert.

FIG.1

EP 0 564 702 A2

Die Erfindung betrifft ein Verfahren zur Datenübertragung auf Fernsprechleitungen von Telekommunikationsanlagen, insbesondere Fernsprechnebenstellenanlagen, parallel zur Sprachübertragung mit einer Trägerfrequenz oberhalb der Frequenz des Sprachbandes.

Für Datenübertragungen auf Fernsprechleitungen sind verschiedene Verfahren bekannt. Dabei werden mittels Weichen an den Endgeräten und in der zentralen Einrichtung der Telekommunikationsanlage die Sprachanteile und die Datenanteile zusammengeführt bzw. wieder getrennt. Als Weichen dienen z.B. Tiefpaßfilter, die analoge Signale der Sprachübertragung durchlassen und digitale Signale einer höheren Trägerfrequenz dämpfen (DE - 34 22 265 C2). Derartige Verfahren benötigen an beiden Endpunkten einen Generator, der die zum Übertragen der Daten erforderliche Trägerfrequenz erzeugt. Dies erfordert einen zusätzlichen wirtschaftlichen Aufwand für die Endgeräte.

Der Erfindung lag die Aufgabe zugrunde, für die genannte Art der Datenübertragung eine wirtschaftlich einfach zu realisierende Möglichkeit für die an den Endgeräten zur Verfügung zu stellende Trägerfrequenz aufzuzeigen.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Die Erfindung wird nachstehend anhand einer aus vier Figuren bestehenden Zeichnung näher erläutert. In der Zeichnung zeigen die einzelnen Figuren nur die zur Datenübertragung erforderlichen Bauelemente.

Es zeigt die

Fig. 1     die Datenübertragungs- und Datenempfangseinrichtungen der zentralen Einrichtung einer Telekommunikationsanlage und eines Endgerätes, die

Fig. 2     eine Lösung für die zentrale Einrichtung bei einer unidirektionalen Koppelnetzdurchschaltung der Sprechwege, die

Fig. 3     das Schaltungsprinzip eines Endgerätes zur Erzeugung eines reflektierten Signals der Trägerfrequenz und die

Fig. 4     das Schaltungsprinzip eines Fernsprechendgerätes unter Nutzung einer vorhandenen Gabelschaltung.

In allen Figuren tragen gleiche Bauelemente dieselben Bezugszeichen.

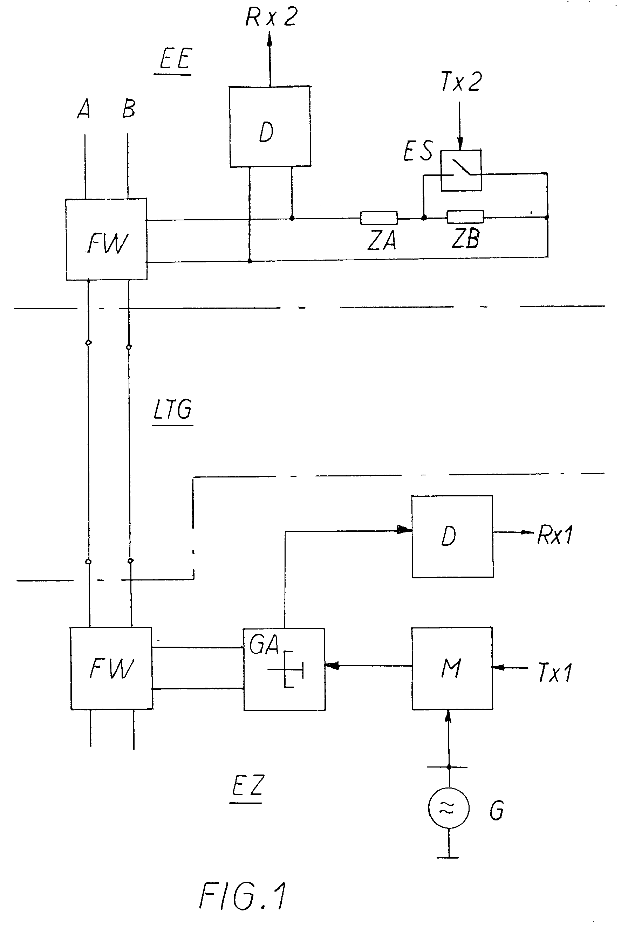

In der Fig. 1 weist die zentrale Einrichtung EZ einer Telekommunikationsanlage eine bidirektionale Frequenzweiche FW auf, über die modulierte Daten an die Fernsprechleitung LTG gelangen bzw. von ihr abgenommen werden. Außerdem enthält die zentrale Einrichtung EZ eine Gabelschaltung GA zum Trennen von Sende- und Empfangsrichtung der Datensignale, an die ein Modulator M und ein Demodulator D angeschaltet sind Die Trägerfrequenz für die Datenübertragung wird durch nur einen Generator G für die Telekommunikationsanlage und die angeschlossenen Endgeräte erzeugt.

Die Endeinrichtung EE, z.B. ein Fernsprechendgerät, enthält ebenfalls eine bidirektionale Frequenzweiche FW und einen Demodulator D für den Datenempfang. Weiterhin sind komplexe Widerstände ZA, ZB und ein mechanischer oder elektronischer Schalter ES zum Senden von Daten vorhanden.

Die Daten werden asynchron im Halbduplexverfahren in Form von Datentelegrammen oder synchron mittels eines digitalen Modulationsverfahrens übertragen.

Die Trägerfrequenz ist derart gewählt, daß ein ausreichender Abstand zum Sprachfrequenzband gewährleistet ist. Als optimal hat sich eine Frequenz von 32 kHz bewährt. Diese Trägerfrequenz liegt im Ruhezustand der Datenübertragung, in dem keine Daten gesendet werden, ständig an den Fernsprechleitungen LTG.

Während einer Datenübertragung von der zentralen Einrichtung EZ zu einer Endeinrichtung EE wird entsprechend dem logischen Zustand des Anschlusses Tx1 am Modulator M die Trägerfrequenz aus- oder eingeschaltet. Dieser Zustand wird vom Demodulator D der Endeinrichtung EE erkannt und über dessen Anschluß Rx2 ausgegeben. Dabei muß die Fernsprechleitung LTG selektiv für die Trägerfrequenz mit dem Wellenwiderstand ZW = ZA + ZB abgeschlossen sein, d.h. der Schalter ES der Endeinrichtung EE muß geöffnet sein.

Für das Senden von Daten von einer Endeinrichtung EE zur zentralen Einrichtung EZ muß sich die letztere im Ruhezustand befinden, der durch die an der Fernsprechleitung LTG liegende Trägerfrequenz gekennzeichnet ist. Entsprechend dem logischen Zustand Tx2 schließt oder öffnet sich der Schalter ES der Endeinrichtung EE. Im geschlossenem Zustand des Schalters ES ist dann die Fernsprechleitung LTG nicht mehr mit dem Wellenwiderstand ZW für die Trägerfrequenz abgeschlossen, sondern nur noch mit der Impedanz ZA, da die Impedanz ZB kurzgeschlossen ist. In diesem Zustand wird ein Teil der Trägerfrequenz in der Endeinrichtung EE als Signal reflektiert. Das reflektierte Signal gelangt über die Gabelschaltung GA an den Demodulator D der zentralen Einrichtung EZ, der es über den Ausgang Rx1 zur Verarbeitung weiterleitet.

In dem Sonderfall, daß die Impedanz ZA = 0 ist und die Impedanz ZB dem Wellenwiderstand ZW entspricht, wird die gesammte Trägerfrequenz reflektiert, da bei geschlossenem Schalter ES ein Kurzschluß am Leitungsende besteht.

Im umgekehrten Zustand, wenn ZA = ZW und ZB = 0 sind, findet keine Reflexion statt, da die Impedanz ZA dem Wellenwiderstand entspricht.

Das dargestellte Verfahren zur Datenübertragung läßt sich auf verschiedene Arten realisieren: Die Frequenzweichen FW und Gabelschaltungen GA können auf herkömmliche Art mittels Übertrager, Induktivitäten und Kapazitäten aufgebaut werden.

Als Gabelschaltung GA ist auch eine elektronische Schaltung verwendbar.

An der Endeinrichtung EE besteht die Möglichkeit, die Impedanzen ZA + ZB bzw. nur ZA durch eine über den Datensendeeingang Tx2 gesteuerte elektronische Schaltung zu simulieren.

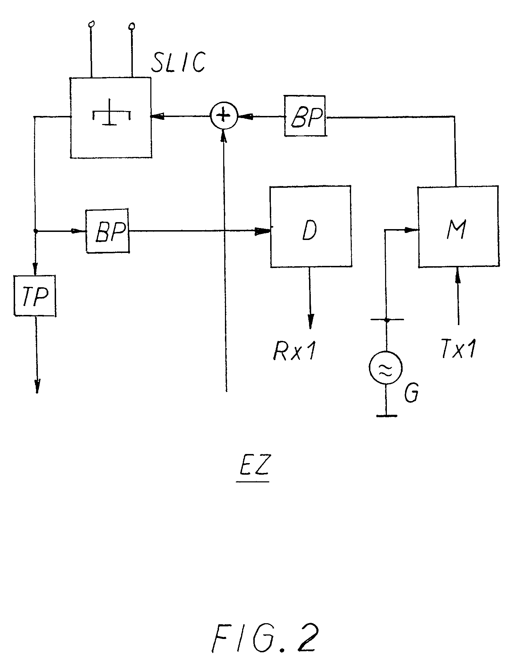

Bei Anwendung des Verfahrens zur Datenübertragung in einer Telekommunikationsanlage mit einem Koppelnetz für vierdrähtige Durchschaltung, bei denen die Endeinrichtungen auf die Anlage bezogene Systemtelefone sind, bietet sich eine Lösung nach der Fig. 2 an. Der hier zur Richtungstrennung eingesetzte Baustein SLIC, der den Anschluß analoger Endgeräte an digitale Systeme dient, umfaßt unter anderem eine Zweidraht-/Vierdrahtumsetzung, die für die Datenübertragung mitbenutzt wird. Ein Tiefpaß TP in der Sprachempfangsleitung verhindert das Durchgreifen der Trägerfrequenz auf das Koppelnetz und Bandpässe BP schirmen den Demodulator D und den Modulator M gegenüber den Sprachfrequenzbereich ab.

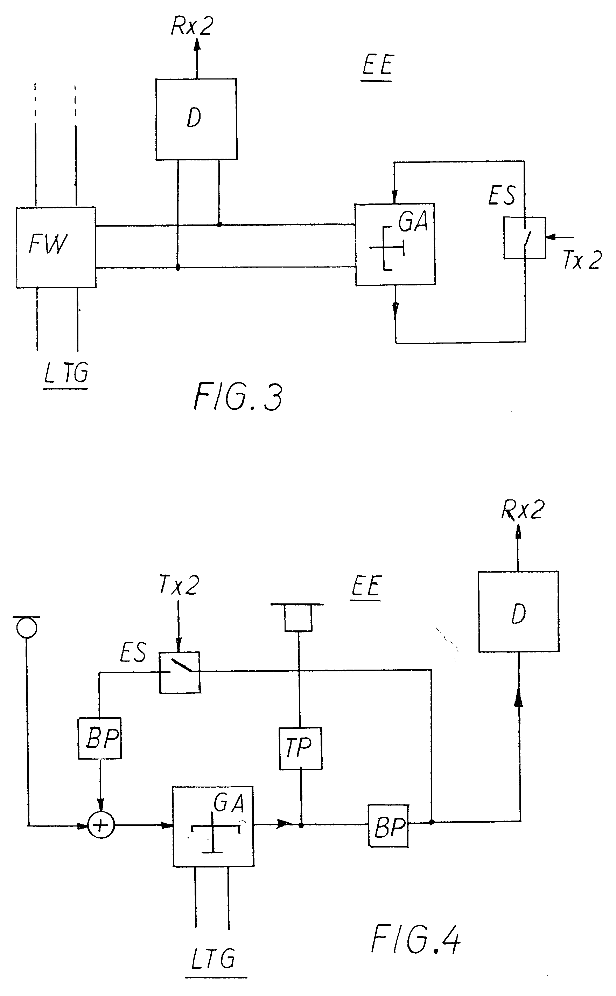

Eine Alternative zum Erzeugen eines reflektierten Signals der Trägerfrequenz besteht darin, wie in der Fig. 3 dargestellt, den Eingang auf der Vierdrahtsseite einer Gabelschaltung GA der Endeinrichtung EE mit deren Ausgang über einen Schalter ES zu verbinden. Damit wird in Abhängigkeit vom logischen Zustand des Anschlusses Tx2 ein Signal der Trägerfrequenz reflektiert. In der Fig. 4 ist dieses Prinzip für ein Fernsprechendgerät dargestellt. Die vorhandene Gabel GA wird mitbenutzt. Die Frequenzweiche FW (Fig. 3) ist dabei durch den Tiefpaß TP und die Bandpässe BP ersetzt. Die Bandpässe BP und der Tiefpaß TP halten die durch das Schalten der Trägerfrequenz entstehenden niederfrequenten Anteile der Signale aus dem Sprachfrequenzband heraus. Weiterhin verhindern sie eine Fehlanpassung im Niederfrequenzbereich durch die Datenübertragung.

**Patentansprüche**

1. Verfahren zur Datenübertragung auf Fernsprechleitungen von Telekommunikationsanlagen, insbesondere Fernsprechnebenstellenanlagen, parallel zur Sprachübertragung mit einer Trägerfrequenz oberhalb der Frequenz des Sprachbandes, dadurch gekennzeichnet, daß zum Erzeugen der Trägerfrequenz nur ein Generator (G) verwendet wird, wobei die Trägerfrequenz ständig an den Fernsprechleitungen (LTG) liegt, auch wenn keine Daten gesendet werden, daß die Trägerfrequenz zum Übertragen von Daten reflektiert wird und daß diese Reflexion über veränderliche Impedanzen (ZA,ZB), die selektiv als Abschluß der Fernsprechleitungen (LTG) gegenüber der Trägerfrequenz eingesetzt sind, gesteuert wird.

2. Verfahren nach Anspruch 1, dadurch gekennzeichnet, daß die veränderlichen Impedanzen (ZA, ZB) durch elektronisch gesteuerte Schaltungen simuliert werden.

3. Verfahren nach Anspruch 1 und 2, dadurch gekennzeichnet, daß die Impedanzen (ZA, ZB) jeweils Bestandteil der Endeinrichtungen (EE) sind.

4. Verfahren nach Anspruch 1, dadurch gekennzeichnet, daß die Reflexionen mittels eines Schalters (ES) erzeugt werden, der bei einer Gabelschaltung (GA) den Eingang der Vierdrahtseite mit deren Ausgang verbindet.

5. Verfahren nach Anspruch 4, dadurch gekennzeichnet, daß als Gabelschaltung (GA) eine Schaltung zum Trennen von Sprach- und Datensignalen eines Bausteines (SLIC) zum Anschluß analoger Endgeräte an digitale Systeme mitgenutzt wird.

6. Verfahren nach Anspruch 1 bis 4, dadurch gekennzeichnet, daß die Signale der reflektierten Trägerfrequenz über Gabelschaltungen (GA, SLIC) Demodulatoren zugeführt werden.

7. Verfahren nach Anspruch 1, dadurch gekennzeichnet, daß der Generator (G) zum Erzeugen der Trägerfrequenz Teil der zentralen Einrichtung (EZ) der Telekommunikationsanlage ist.

FIG.1

EZ

FIG.2

FIG.3

FIG.4

6